# EUROPÄISCHE PATENTANMELDUNG

(11) **EP 2 154 206 A1**
(43) Veröffentlichungstag der Anmeldung: **17.02.2010**
(21) Anmeldenummer: 08013513.0
(22) Anmeldetag: 26.07.2008
(51) Int. Cl.: C09C 1/00, C09C 3/08, C09C 3/10

(54) **Stabilisierte Nanopartikeldispersionen**

(71) Anmelder: Bayer MaterialScience AG, 51368 Leverkusen (DE)
(72) Erfinder: Die Erfindernennung liegt noch nicht vor

(57) **Zusammenfassung**

Die vorliegende Erfindung betrifft neuartige Stabilisatoren von Nanopartikeln in disperser Phase sowie die entsprechend stabilisierten Dispersionen insbesondere von Lithium-Molybdat-Partikeln und deren Verwendung.

## Beschreibung

Die vorliegende Erfindung betrifft neuartige Stabilisatoren von Nanopartikeln in disperser Phase sowie die entsprechend stabilisierten Dispersionen insbesondere von Lithium-Molybdat-Partikeln und deren Verwendung.

Molybdate, insbesondere Lithium-Molybdat, besitzen großes Interesse als Katalysatoren für die Beschleunigung der Reaktion von wässrigen 2K-PUR Anwendungen, da sie zur Reaktionsbeschleunigung beitragen, jedoch die Topfzeit des Systems nicht beeinträchtigen.

Alkalimetallmolybdate sind wasserlöslich, so dass sie daher typischerweise direkt in die wässrigen 2K-PUR Formulierungen eingebracht wurden können. Eine direkte Einarbeitung in eine wasserfreie Komponente oder Zusammensetzung wie beispielsweise die Isocyanatkomponente, ist nicht so ohne weiteres möglich, da die Alkalimetallmolybdate normalerweise grobkristallin und nicht oder kaum in dem organischen Medium löslich sind und somit eine homogene Einarbeitbarkeit nicht gegeben ist. Zudem würden die freien NCO-Gruppen mit dem Wasser einer wässrigen Molybdatlösung reagieren, was ebenfalls unerwünscht ist.

In WO 2007/087988 wird ein Verfahren zur Herstellung von Nanopartikeln, insbesondere Molybdat-Partikeln beschrieben, die sich homogen in organischen Medien formulieren lassen und so eine direkte Einarbeitung in wasserfreie Lackbindemittel oder -vernetzer zu ermöglichen. Nachteil dieses Verfahrens war es jedoch, dass bei Einbringen in Polyisocyanate nach einem längeren Zeitraum Eintrübung durch Koagulation sowie Verfärbung der Proben auftrat.

Die Aufgabe bestand darin, eine Möglichkeit aufzufinden, solche Dispersionen, insbesondere von nanoskaligen Molybdatpartikeln zu stabilisieren, so dass sie zusammen mit Polyisocyanaten eine verbesserte Lagerstabilität aufweisen. Dies konnte nun durch spezielle Stabilisatoren gelöst wurden.

Gegenstand der Erfindung ist daher die Verwendung von oxyalkylengruppenhaltige Di- oder Polyisocyanaten zur Stabilisierung von Partikeldispersionen mit Teilchengrößen gemessen mittels dynamischer Lichtstreuung von 1 bis 500 nm.

Stabilisierung meint in diesem Zusammenhang die Verbesserung der Beständigkeit der Dispersionen gegen Feststoffseparation, Vergelung, Aushärtung oder Verfärbungen.

Gegenstand der Erfindung ist ferner ein Verfahren zur Herstellung von Dispersionen nanopartikulär dispergierter Partikel wasserlöslicher Verbindungen mit einer mittleren Teilchengröße gemessen mittels dynamischer Lichtstreuung von 1 bis 500 nm, bei dem eine Wasser-in-Öl-Emulsion aus
A) einer wässrigen Lösung eines oder mehrerer wasserlöslicher Salze,
B) einem organischen Lösungsmittel oder Lösungsmittelgemisch und
C) Emulsionsstabilisatoren,
   hergestellt wird und anschließend das enthaltene Wasser bis zu einem Restgehalt von maximal 2 Gew.-% bezogen auf das Endprodukt entfernt wird und dann mit einer Mischung umfassend
D) oxyalkylengruppenhaltige Di- oder Polyisocyanate als Stabilisatoren und
E) organische Lösemittel vermischt wird.

### Ebenfalls Gegenstand der Erfindung sind die so erhältlichen Dispersionen

Darüber hinaus ist ein Verfahren zur Herstellung von Dispersionen nanopartikulär dispergierter Partikel wasserlöslicher Verbindungen mit einer mittleren Teilchengröße gemessen mittels dynamischer Lichtstreuung von 1 bis 500 nm in Polyisocyanaten ein Gegenstand der Erfindung wie auch so erhältlichen Dispersionen durch Abmischung der nach den Schritten A) bis E) erhaltenen Dispersionen mit Polyisocyanaten.

Die angegebenen Teilchengrößen beziehen sich auf Messungen mittels dynamischer Lichtstreuung (T. Allen, Chapter 10 "Field scanning methods of particles size measurement" in Particle size measurement, fifth edition, Kluwer Academic Publishers (1999)).

Für den Gegenstand der Erfindung ist es unerheblich, ob die Nanopartikel kristallin oder amorph sind.

Unter Molybdaten wurden die Salze der Molybdänsäure H₂MoO₄ und deren Polysäuren verstanden, die durch Umsetzung der Säuren mit Basen gewonnen wurden. Wurden Alkalimetall- oder Erdalkalimetallhydroxide als Basen eingesetzt, wurden Alkalimetall- oder Erdalkalimetallmolybdate erhalten.

Unter einer wässrigen Lösung eines wasserlöslichen Salzes wird im Rahmen der vorliegenden Erfindung eine homogene Lösung des betreffenden Salzes bei der betreffenden Temperatur in Wasser als Lösungsmittel verstanden, wobei das Salz vollständig darin gelöst vorliegt und keinerlei Feststoffausscheidung in der Lösung zu beobachten ist. Diese wässrigen Lösungen können bis zu 5 Gew.-% eines von Wasser verschiedenen Lösungsmittels (Cosolvens) enthalten, solange dadurch die Ausbildung der Emulsion nicht gestört wird. Bevorzugt enthalten sie ausschließlich Wasser als Lösungsmittel.

In Komponente A) werden bevorzugt Salze mit einer Löslichkeit von wenigstens 0,1 g/100 g Lösungsmittel, bevorzugt 1 bis 89,6 g/100 g Lösungsmittel eingesetzt (in Wasser bei 25 °C (=Raumtemperatur)).

Bevorzugt werden in A) Lithium- und Natriumsalze als wasserlösliche Salze eingesetzt. Besonders bevorzugt werden in A) Molybdatsalze, bevorzugt Lithium-, Natrium- oder Zinkmolybdat, besonders bevorzugt Lithiummolybdat eingesetzt.

Zur Herstellung der erfindungsgemäß einzusetzenden wässrigen Lösungen wird bevorzugt vollentsalztes Wasser mit einer Leitfähigkeit von weniger als <5µS/cm eingesetzt.

Die in A) eingesetzten Lösungen haben typischerweise Salzkonzentrationen von 0,01 bis 40 Gew.-%, bevorzugt 0,1 bis 30 Gew.-%, besonders bevorzugt 0,5 bis 20 Gew.-%.

In B) können alle üblichen organischen Lösungsmittel eingesetzt werden, die mit Wasser nicht unbegrenzt mischbar sind und so mit Wasser ein Zweiphasengemisch ausbildeten können. Dies sind beispielsweise Octan, Decan, Dodecan, halogenierte Kohlenwasserstoffe wie 1,2-Dichlorethan, langkettige Alkohole, aromatische Lösungsmittel wie Toluol, Xylol, Solvesso (Markenzeichen der Exxon Mobile, Huston, USA) sowie ether- und/oder estergruppenhaltige Verbindungen.

Bevorzugt werden in B) Butylacetat, Methoxypropylacetat, Essigsäureethylester, Caprolacton, Solvesso, Toluol, Xylol oder deren Mischungen eingesetzt werden. Besonders bevorzugt ist Butylacetat.

In einer bevorzugten Ausführungsform wird das in B) eingesetzte Lösungsmittel zuvor mit Wasser gesättigt, das heißt, es wird dem organischen Lösungsmittel oder Lösungsmittelgemisch so viel Wasser zugegeben bis sich bei der herrschenden Temperatur ein Zweiphasengemisch bildet. Das überstehende Lösungsmittel ist dann mit Wasser gesättigt und kann in B) eingesetzt werden.

Geeignete Stabilisatoren C) sind nichtionische Tenside, anionische Tenside und kationische Tenside sowie Blockcopolymere oder Polyelectrolyte. In Gegenwart niedermolekularer Tenside mit Molekulargewichten von weniger als 1000 g/mol können Cotenside wie Alkanole mit C1-C10 Kohlenstoffketten vorteilhafterweise mit eingesetzt werden..

Bevorzugte Stabilisatoren sind Polymere, besonders bevorzugt Blockcopolymere, die entsprechend Foerster und Antonietti (Foerster, S. & Antonietti, M., Advanced Materials, 10, no. 3, (1998) 195) einen Solvatblock für die Wechselwirkung mit dem Lösungsmittel sowie einen funktionellen Block für die Wechselwirkung mit der Partikeloberfläche tragen.

Solvatblöcke unterscheiden sich in ihrer Hydrophilie/Hydrophobie und können sein Poly(styrolsulfonsäure) (PSSH), Poly(N-Alkylvinylpyridinium Halogenid) (PQ2VP, PQ4VP), Poly(methacrylsäure) (PMAc, PAAc), Poly(methacrylate) (PMA), Poly(N-Vinylpyrrolidon) (PVP), Poly(Hydroxyethylmethacrylat) (PHEMA), Poly(vinylether) (PVE), Poly(ethylenoxid) (PEO), Poly(propylenoxid) (PPO), Poly(vinyl methyl ether) (PVME), Poly(vinyl butyl ether) (PVBE), Polystyrol (PS), Poly(ethylenpropylen) (PEP), Poly(ethylethylen) (PEE), Poly(isobutylen) (PIP), Poly(dimethylsiloxan) (PDMS), partiell fluorierte Blöcke (PF).

Funktionelle Blöcke zeichnen sich durch die Fähigkeit zur spezifischen Wechselwirkung mit den zu bildenden Partikeloberflächen aus. Derartige Wechselwirkungen können vom Typ Liganden-, Säure-Base-, elektrostatische, komplexe, niederenergetische Wechselwirkungen sein, so z.B. Poly(N-Alkylvinylpyridinium Halogenid) (PQ2VP, PQ4VP), Poly(dimethylsiloxan) (PDMS), partiell fluorierte Blöcke (PF), Poly(ethylenoxid) (PEO), spezifische Liganden-haltige Blöcke (PL; bspw. Mercaptogruppen enthaltende Blöcke für Metall-Mercapto-Wechselwirkungen etc.), Poly(methacrylsäure) (PMAc), Poly(styrolsulfonsäure) (PSSH), Poly(cyclopentadienyl-methylnorbornen) (PCp; bspw. Wechselwirkungen mit Übergangsmetallen via Metallocen-Komplexierung), Poly(aminoacid) blocks (PA; e.g. "site-specific drug delivery", Bionmineralisation).

Für das erfindungsgemäße Verfahren werden besonders bevorzugt PEO-PPO-PEO- oder PPO-PEO-PPO-Blockcopolymere, Copolymere mit Poly(ethylenoxid)-Poly(methylmethacrylat)- (PEO-PMMA) oder Poly(ethylenoxid)-Poly(n-butylacrylat)-Blöcken (PEG-nBA) oder Polyoxyalkylene-Amine (z.B. Jeffamine, Fa. Huntsman) eingesetzt. Diese weisen bevorzugt Molmassen von 400 bis 20 000 g/mol, bevorzugt 1000 bis 10 000 g/mol auf (Molmassen nach DIN53240 OH-Zahlbestimmung).

Ganz besonders bevorzugt werden Blockcopolymere des Typs Pluronic mit PEO-PPO-PEO-Blöcken und Molmassen von 2 000 bis 10 000 g/mol eingesetzt (Molmassen nach D1N53240 OH-Zahlbestimmung).

Grundsätzlich sind die entsprechenden Mengen und Konzentrationen der Komponenten A) B) und C) für den Fachmann leicht anhand von Routineversuchen zu bestimmen.

Bevorzugt werden A), B) und C) in solch einem Verhältnis zueinander eingesetzt, dass bezogen auf das resultierende Gesamtgemisch vor der Entfernung des Wassers
0,01 bis 50 Gew.-% Wasser
40 bis 99,9 Gew.-% organisches Lösungsmittel
0,001 bis 40 Gew.-% in Form von Nanopartikel auszufällendes Salz und
0,01 bis 60 Gew.-% Stabilisator C)
enthalten ist.

Besonders bevorzugt beträgt die Zusammensetzung des Gemisches vor der Entfernung des Wassers 1 bis 20 Gew.-% Wasser, 50 bis 98,8 Gew.-% organisches Lösungsmittel, 0,005 bis 10 Gew.-% in Form von Nanopartikel ausgefälltes Salz und 0,1 bis 20 Gew.-% Stabilisator.

Ganz besonders bevorzugt beträgt die Zusammensetzung des Gemisches vor der Entfernung des Wassers 2 bis 10 Gew.-% Wasser, 79 bis 97 Gew.-% organisches Lösungsmittel, 0,01 bis 1 Gew.-% in Form von Nanopartikel ausgefälltes Salz und 0,1 bis 10 Gew.-% Stabilisator.

Die sich bei Vermengen der Komponenten A) bis C) bildende Emulsion enthält gequollene Mizellen bzw. Tropfen des in Wasser gelösten Salzes in dem organischen Lösungsmittel als kontinuierlicher Phase, wobei diese Mizellen bzw. Tropfen durch den Stabilisator C) stabilisiert sind. Die Mizell- bzw. Tropfengrößen mittels TEM (nach Gefrierätzung und Kohlebeschichtung), dynamischer Lichtstreuung oder Laserbeugung gemessen betragen typischerweise 10 nm bis 50 000 nm, bevorzugt 10 nm bis 5000 nm, besonders bevorzugt 1 bis 500 nm, ganz besonders bevorzugt 1 nm bis 100 nm. Im letzteren Fall spricht man von so genannten Microemulsionen.

Microemulsionen zeichnen sich allgemein durch eine hohe Transparenz bedingt durch Tröpfchengrößen von unter 100 nm und niedrige Grenzflächenenergien von unter 0,1 mN/m aus. In Gegenwart wässrig gelöster Salze und polymerer Additive kann die Transparenz abnehmen sowie die Grenzflächenenergie ansteigen, dennoch bilden sich spontan die Emulsionen, d.h. es sind thermodynamisch begünstigte Systeme. Im erfindungsgemäßen Verfahren wurden bevorzugt Microemulsionen eingesetzt, die nach einfachem Mischen der Komponenten A) bis C) und leichtem Schütteln selbstdispergierend sind.

Die Komponenten A) bis C) können in beliebiger Reihenfolge gemischt werden, bevorzugt werden die Stabilisatoren der Komponente B) zugesetzt, bevor A) und B) miteinander vermischt.

Die Vermischung der wässrigen mit der organischen Phase erfolgt unter Rühren bzw. unter Zufuhr erhöhter Energie bspw. durch Hochdruckhomogenisation, Rotor-Stator-Systeme, Turrax, Ultraschall, Magnetrührer oder andere Dispergierverfahren, bevorzugt unter Rühren mittels konventioneller Rührer wie Magnetrührern oder Rotor-Stator-Systemen.

Bevorzugt wird das Verfahren bei Temperaturen von -5 °C bis 150 °C, besonders bevorzugt -5 °C bis 80 °C, ganz besonders bevorzugt -5 bis 40 °C durchgeführt.

Das nach der Vermischung von A) bis C) in dem System noch enthaltene Wasser muss anschließend entfernt werden. Geeignet hierzu sind der Zusatz von Trocknungsmittel, destillative Verfahren, Erhöhung der Löslichkeit von Wasser in der organischen Phase durch polare Lösungsmittelzusätze, Sprühtrocknung oder Gefriertrocknung. Im Falle der Sprüh- oder Gefriertrocknung werden Wasser und organisches Lösungsmittel gleichzeitig abgetrennt.

Bevorzugt wird das Wasser mittels Sprühtrocknung oder dem Lösungsmittel entsprechenden Trocknungsverfahrenn wie Destillieren oder mittels Silicagel entfernt. Besonders bevorzugt ist das Verfahren der Sprühtrocknung.

Diese nahezu vollständige Entfernung des enthaltenen Wassers ist erfolgswesentlich, da es anderenfalls nicht zu einer Auskristallisation bzw. amorphen Fällung der im Wasser enthaltenen Salze und damit zur Partikelbildung kommt.

Wird bei der Abtrennung des Wassers nur das Wasser und nicht auch das enthaltene organische Lösungsmittel entfernt, so werden Dispersionen der gewünschten Nanopartikel in diesem organischen Medium erhalten. Bevorzugt beträgt der Restgehalt an Wasser in den so erhaltenen stabilen Dispersionen der erfindungsgemäßen Partikel weniger als 1 Gew.-%, besonders bevorzugt weniger als 0,5 Gew.-%.

Die Partikel können außerdem als redispergierbare Gele oder Pulver durch vollständiges Abtrennen von Lösemittel und Wasser durch destillative Verfahren, Sprühtrocknung, Gefrierttrocknung oder Filtration erhalten werden. Diese Gele bzw. Pulver haben typischerweise Feststoffgehalte von 0,1 bis 75 Gew.-%, bevorzugt 0,5 bis 50 Gew.-%, besonders bevorzugt 0,5 bis 35 Gew.-% des nanopartikulären Salzes in Stabilisatormatrix. Der Restgehalt an Wasser und organischem Lösemittel beträgt typischerweise weniger als 5 Gew.-%, bevorzugt weniger als 1 Gew.-% bezogen auf das erhaltene Pulver bzw. Gel.

Die in D) als Stabilisatoren eingesetzten oxyalkylengruppenhaltigen Di- oder Polyisocyanate sind durch Umsetzung von aliphatischen, cycloaliphatischen, araliphatischen oder aromatischen Di-oder Polyisocyanaten (I) mit Verbindungen (II) erhältlich, die neben Oxyalkylengruppen wenigstens eine gegenüber Isocyanatgruppe reaktive Gruppe aufweisen.

Geeignete Isocyanate (I) für die Herstellung der oxyalkylengruppenhaltigen Di- oder Polyisocyanate sind beliebige durch Phosgenierung oder nach phosgenfreien Verfahren, beispielsweise durch thermische Urethanspaltung, zugängliche Diisocyanate des Molekulargewichtsbereichs 140 bis 400 g/mol mit aliphatisch, cycloaliphatisch, araliphatisch und/oder aromatisch gebundenen Isocyanatgruppen, wie 1,4-Diisocyanatobutan, 1,6-Diisocyanatohexan (HDI), 2- Methyl-1,5-diiso-cyanatopentan, 1,5-Diisocyanato-2,2-dimethylpentan, 2,2,4- bzw. 2,4,4-Trimethyl-1,6-düsocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato- 3,3,5-trimethyl-5-isocyanatomethy-lcyclohexan (Isophorondiisocyanat, IPDI), 4,4'- Diisocyanatodicyclohexylmethan, 1-Isocyanato-l-methyl-4(3)isocyanato-methylcyclohexan, Bis-(isocyanatomethyl)-norbornan, 1,3- und 1,4-Bis-(1-isocyanato-1- methylethyl)-benzol (TMXDI), m-Xylylendiisocyanat (XDI), 2,4- und 2,6-Diisocyanatotoluol (TDI), 2,4'- und 4,4'- Diisocyanatodiphenylmethan (MDI), 1,5-Diisocyanatonaphthalin oder beliebige Gemische solcher Diisocyanate.

Bevorzugte Isocyanate (I) sind solche der vorstehend genannten Art auf Basis von IPDI, MDI, TDI, HDI oder deren Gemischen, ganz besonders bevorzugt HDI.

Statt oder zusätzlich zu den monomeren Isocyanaten der vorstehend genannten Art können in (I) auch Polyisocyanate mit Uretdion-, Isocyanurat-, Allophanat-, Biuret-, Iminooxadiazindion-und/oder Oxadiazintrionstrukturen, wie sie aus den genannten monomeren Isocyanaten durch dem Fachmann bekannte Umsetzungen (Laas et al. (1994), J. prakt. Chem. 336, 185-200 oder in Bock (1999), Polyurethane für Lacke und Beschichtungen, Vincentz Verlag, Hannover, S. 21-27) erhältlich sind, eingesetzt werden.

Diese Polyisocyanate haben bevorzugt NCO-Funktionalitäten von 2,3 bis 4,5, Gehalte an NCO-Gruppen von 11,0 bis 24,0 Gew.-% und Gehalte an monomeren Diisocyanaten von bevorzugt weniger als 1 Gew.-%, besonders bevorzugt kleiner 0,5 Gew.-%.

Bevorzugt sind die oxyalkylengruppenhaltigen Verbindungen (II) amino- oder hydroxyfunktionell.

Besonders bevorzugt sind als oxyalkylengruppenhaltige Verbindungen (II) hydroxyfunktionelle Polyether auf Basis von Alkylenoxiden wie Ethylenoxid, Propylenoxid oder deren Mischungen mit einem zahlenmittleren Molekulargewicht von 200 bis 4000 g/mol, bevorzugt 400 bis 3000 g/mol, besonders bevorzugt 800 bis 2500 g/mol.

Geeignete Polyetheralkohole sind entweder reine Polyethylenoxid- oder Polypropylenoxidpolyetheralkohole. Bevorzugt werden jedoch gemischte Polyalkylenoxidpolyether eingesetzt, in denen mindestens 20 % der Alkylenoxideinheiten aus Ethylenoxideinheiten bestehen, besonders bevorzugt 50 bis 90 %, ganz besonders bevorzugt 70 bis 90 %.

Bevorzugt weisen diese Polyether der vorstehend genannten Art eine OH-Funktionalität von 1 bis 4, bevorzugt 1 bis 2, besonders bevorzugt 1 auf.

Bei der Modifizierung beträgt das Verhältnis von freien NCO-Gruppen des zu modifizierenden Isocyanats zu den NCO-reaktiven OH-Gruppen des Polyethers bevorzugt 1 : 0,01 bis 1 : 0,8, besonders bevorzugt 1 : 0,02 bis 1 : 0,6, ganz besonders bevorzugt 1: 0,05 bis 1 : 0,4.

Prinzipiell ist es natürlich auch möglich, höhere Anteile an NCO-Gruppen mit den vorgenannten Polyethern zu modifizieren.

Die Herstellung der oxyalkylengruppenhaltigen Di- oder Polyisocyanate erfolgt bei 0 bis 150 °C, bevorzugt bei 20 bis 120 °C, besonders bevorzugt bei 40 bis 100 °C. Gegebenenfalls kann eine exotherme Reaktion durch Kühlung kontrolliert werden.

Die in E) eingesetzten organischen Lösemittel sind derart ausgewählt, dass diese die wasserlöslichen zur Herstellung der Partikel eingesetzten Salze nicht lösen, andererseits die Partikel in ihnen unter den genannten Umständen der Herstellung dispergierbar oder redispergierbar sind, ohne dass es zu Teilchenagglomeration kommt. Dies sind die bereits unter B) genannten Verbindungen wie ferner auch wassermischbare Lösemittel wie beispielsweise N-Methylpyrrolidone, Dimethylformamid oder Dimethylsulfoxid.

Bevorzugt werden in E) Butylacetat, Ethylacetat, 1-Methoxy-2-propylacetat, Toluol, 2-Butanon, Xylol, 1,4-Dioxan, Diacetonalkohol, N-Methylpyrrolidon, Dimethylacetamid, Dimethylformamid, Dimethylsulfoxid, Methylethylketon oder beliebige Gemische solcher Lösungsmittel eingesetzt. Besonders bevorzugt ist Butylacetat.

Die erfindungsgemäßen Dispersionen haben typischerweise Feststoffgehalte von 0,001 bis 50 Gew.-%, bevorzugt 0,002 bis 20 Gew.-%, besonders bevorzugt, 0,005 bis 5 Gew.-%, ganz besonders bevorzugt 0,01 bis 1 Gew.-%.

Bevorzugt weisen die erfindungsgemäßen Dispersionen Teilchengrößen von 1 bis 150 nm, besonders bevorzugt 5 bis 60 nm auf.

Die erfindungsgemäß Dispersionen besitzen die vorstehend genannten mittleren Partikelgrößen, wobei weniger als 10 %, bevorzugt weniger als 5 %, besonders bevorzugt weniger als 1 % der Partikel Größen von mehr als 300 nm, bevorzugt 200 nm aufweisen. Die Teilchengrößen wurden erfindungsgemäß mittels dynamischer Lichtstreuung (T. Allen, Chapter 10 "Field scanning methods of particles size measurement" in Particle size measurement, fifth edition, Kluwer Academic Publishers (1999)) ermittelt. Solche groben Partikel können unter anderem durch irreversible Agglomeration bei der Herstellung der Gele bzw. Pulver entstehen und sind daher unerwünscht, weil die Feinteiligkeit der aus solchen Partikel hergestellten Dispersionen leidet und eine homogene Einarbeitbarkeit erschwert. Solche Partikel werden daher als Grobanteil bezeichnet. Gegebenenfalls können geringfügige Mengen an Grobanteil abfiltriert werden.

Aufgrund dieser einzigartigen Kombination aus mittlerer Teilchengröße und geringem Grobanteil ist es möglich, Partikel der zugrunde liegenden wasserlöslichen Salze homogen in organischen Medien zu formulieren. Solche transparenten Dispersionen können sogar langzeitstabil sein, d.h. es tritt auch nach Monaten der Lagerung keinerlei Feststoffablagerung auf. Sollte doch eine Feststoffablagerung auftreten ist diese durch einfaches Schütteln oder Aufrühren des Lagergefäßes zu beseitigen, wobei die abgelagerten Partikel wieder in die disperse Phase übergehen. Ablagerung harter Bestandteile oder von Gelpartikeln, die nicht wieder redispergierbar sind, tritt nicht auf.

Die erfindungsgemäße Herstellung hat dabei den Vorteil, dass es sich um eine Art Um- oder Reprezipitation des betreffenden Salzes handelt, wobei nebenproduktfrei die gewünschten Nanopartikel erhalten werden und nach der Abtrennung des Wassers keinerlei weitere Aufarbeitungsschritte wie Entfernung von Salzen notwendig sind.

Die erfindungsgemäßen Dispersionen sind, wenn sie Molybdatpartikel enthalten, besonders gut als Katalysatoren für wässrige Polyurethananwendungen geeignet.

Daher ist ein weiterer Gegenstand der Erfindung die Verwendung der erfindungsgemäßen Molybdatpartikel als Katalysatoren für wässrige 2K-PUR Anwendungen.

Zur Herstellung der erfindungsgemäßen Partikeldispersionen in Polyisocyanaten werden die erfindungsgemäß stabilisierten Partikeldispersionen mit Polyisocyanaten abgemischt. Diese Polyisocyanate können die im Rahmen der Komponente D) bereits beschriebenen Polyisocyanate sein. Außerdem können wasserdispergierbare Polyisocyanate eingesetzt werden.

Zur Herstellung derartiger wasserdispergierbarer Polyisocyanate sind eine Vielzahl unterschiedlicher Verfahren bekannt, beispielsweise die Umsetzung hydrophober Polyisocyanate mit hydrophilen Polyetheralkoholen (siehe z. B. EP-B 0 206 059, EP-B 0 540 985 und EP-B 0 959 087), die Abmischung und/oder Umsetzung mit speziellen hydrophilen Polyetherurethanen (siehe z. B. EP-B 0 486 881 und WO 2005/047357), die Umsetzung mit ionischen Gruppen aufweisenden Verbindungen (siehe z. B. WO 01/88006) oder einfaches Abmischen hydrophober Polyisocyanate mit geeigneten gegenüber Isocyanatgruppen inerten Emulgatoren (siehe z. B. WO 97/31960).

Die wasserdispergierbaren hydrophilen Polyisocyanate oder Polyisocyanatgemische enthalten mindestens einen ionischen und/oder nichtionischen Emulgator F).

Hierbei handelt es sich um beliebige grenzflächenaktive Stoffe, die aufgrund ihrer Molekülstruktur in der Lage sind, Polyisocyanate bzw. Polyisocyanatgemische in wäßrigen Emulsionen über einen längeren Zeitraum zu stabilisieren.

Eine Art nichtionischer Emulgatoren F) stellen beispielsweise Umsetzungsprodukte F1) der Polyisocyanatkomponenten mit hydrophilen Polyetheralkoholen dar.

Geeignete hydrophile Polyetheralkohole sind ein- oder mehrwertige, im statistischen Mittel 5 bis 50 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38). Solche Startermoleküle können beispielsweise beliebige ein- oder mehrwertige Alkohole des Molekulargewichtsbereiches 32 bis 300 sein, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol, Tetrahydrofurfurylalkohol, 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Geeignete Polyetheralkohole sind entweder reine Polyethylenoxidpolyetheralkohole oder gemischte Polyalkylenoxidpolyether, deren Alkylenoxideinheiten zu mindestens 70 mol-%, vorzugsweise zu mindestens 80 mol-% aus Ethylenoxideinheiten bestehen.

Bevorzugte Polyalkylenoxidpolyetheralkohole sind solche, die unter Verwendung der oben genannten Monoalkohole des Molekulargewichtsbereiches 32 bis 150 g/mol als Startermoleküle hergestellt wurden. Besonders bevorzugte Polyetheralkohole sind reine Polyethylenglycolmonomethyletheralkohole, die im statistischen Mittel 5 bis 50, ganz besonders bevorzugt 5 bis 25 Ethylenoxideinheiten aufweisen.

Die Herstellung solcher nichtionischer Emulgatoren ist prinzipiell bekannt und beispielsweise in EP-B 0 206 059 und EP-B 0 540 985 beschrieben.

Die Herstellung kann durch Umsetzung der Polyisocyanatkomponente mit den genannten Polyetheralkoholen entweder in einem separaten Reaktionsschritt mit anschließendem Vermischen mit den in eine hydrophile Form zu überführenden Polyisocyanatkomponente oder aber in der Weise erfolgen, dass man die Polyisocyanatkomponente mit einer entsprechenden Menge der Polyetheralkohole abmischt, wobei sich spontan ein hydrophiles Polyisocyanat bildet, das neben nicht umgesetztem Polyisocyanat den sich in situ aus dem Polyetheralkohol und einem Teil der Polyisocyanatkomponente bildenden Emulgator F1) enthält.

Die Herstellung dieser Art nichtionischer Emulgatoren F1) erfolgt im allgemeinen bei Temperaturen von 40 bis 180 °C, vorzugsweise 50 bis 150 °C, unter Einhaltung eines NCO-/OH-Äquivalent-Verhältnisses von 2:1 bis 400:1, vorzugsweise von 4:1 bis 140:1.

Bei der erstgenannten Variante der separaten Herstellung der nichtionischen Emulgatoren F1) werden diese vorzugsweise unter Einhaltung eines NCO/OH-Äquivalentverhältnisses von 2 : 1 bis 6 : 1 hergestellt. Bei der in situ-Herstellung der Emulgatoren F1) kann selbstverständlich ein hoher Überschuss an Isocyanatgruppen innerhalb des oben genannten breiten Bereichs zur Anwendung gelangen.

Die Reaktion der Polyisocyanatkomponente mit den genannten hydrophilen Polyetheralkoholen zu nichtionischen Emulgatoren F1) kann nach dem in EP-B 0 959 087 beschriebenen Verfahren auch so geführt werden, dass die durch NCO/OH-Reaktion primär gebildeten Urethangruppen zumindest anteilig, vorzugsweise zu mindestens 60 mol-%, zu Allophanatgruppen weiter umgesetzt werden. In diesem Fall werden Reaktionspartner im oben genannten NCO/OH-Äquivalentverhältnis bei Temperaturen von 40 bis 180 °C, vorzugsweise 50 bis 150 °C, in der Regel in Gegenwart der in den zitierten Patentschriften angeführten, zur Beschleunigung der Allophanatisierungsreaktion geeigneten Katalysatoren zur Reaktion gebracht.

Ein weiterer Typ geeigneter nichtionischer Emulgatoren F) für wasserdispergierbare Polyisocyanate stellen beispielsweise auch Umsetzungprodukte von monomeren Diisocyanaten oder Diisocyanatgemischen mit den oben genannten ein- oder mehrwertigen hydrophilen Polyetheralkoholen, insbesondere mit reinen Polyethylenglycolmonomethyletheralkoholen, die im statistischen Mittel 5 bis 50, bevorzugt 5 bis 25 Ethylenoxideinheiten aufweisen, dar. Die Herstellung solcher Emulgatoren F2) ist ebenfalls bekannt und beispielsweise in EP-B 0 486 881 beschrieben.

Gegebenenfalls können die Polyetherurethan-Emulgatoren F2) aber auch im Anschluss an das Abmischen der Komponenten in den vorstehend beschriebenen Mengenverhältnissen in Gegenwart geeigneter Katalysatoren mit den Polyisocyanaten unter Allophanatisierung umgesetzt werden. Dabei entstehen ebenfalls hydrophile Polyisocyanate, die neben nicht umgesetztem Polyisocyanat einen sich in situ aus dem Emulgator F2) und einem Teil der Polyisocyanate bildenden weiteren nichtionischen Emulgatortyp F3) mit Allophanatstruktur enthalten. Auch die in situ-Herstellung solcher Emulgatoren F3) ist bereits bekannt und beispielsweise in WO 2005/047357 beschrieben.

Die hydrophilen Polyisocyanatgemische können anstelle der beispielhaft beschriebenen nichtionischen Emulgatoren auch Emulgatoren mit ionischen, insbesondere anionischen Gruppen enthalten.

Solche ionischen Emulgatoren F) stellen sulfonatgruppenhaltige Emulgatoren F4) dar, wie sie beispielsweise nach dem Verfahren der WO 01/88006 durch Umsetzung der Polyisocyanatkomponente mit 2-(Cyclohexylaminopethansulfonsäure und/oder 3-(Cyclohexylamino)-propansulfonsäure erhältlich sind. Diese Umsetzung findet in der Regel bei Temperaturen von 40 bis 150 °C, vorzugsweise 50 bis 130 °C, unter Einhaltung eines Äquivalent-Verhältnisses von NCO-Gruppen zu Aminogruppen von 2:1 bis 400:1, vorzugsweise von 4:1 bis 250:1, statt, wobei zur Neutralisation der Sulfonsäuregruppen tertiäre Amine mitverwendet werden. Geeignete Neutralisationsamine sind beispielsweise tertiäre Monoamine, wie z. B. Trimethylamin, Triethylamin, Tripropylamin, Tributylamin, Dimethylcyclohexylamin, Diisopropylethylamin, N-Methylmorpholin, N-Ethylmorpholin, N-Methylpiperidin, oder N-Ethylpiperidin, tertiäre Diamine, wie z. B. 1,3-Bis-(dimethylamino)-propan, 1,4-Bis-(dimethylamino)-butan oder N,N'-Dimethylpiperazin, oder, allerdings weniger bevorzugt, Alkanolamine, wie z. B. Dimethylethanolamin, Methyldiethanolamin oder Triethanolamin.

Wie bereits für die nichtionischen Emulgatoren F1) beschrieben, kann auch die Herstellung dieser ionischen Emulgatoren F4) entweder in einem separaten Reaktionsschritt mit anschließendem Vermischen mit den in eine hydrophile Form zu überführenden Polyisocyanatkomponente oder aber in situ in diesen Polyisocyanatkomponenten erfolgen, wobei sich direkt ein hydrophiles Polyisocyanatgemisch bildet, das neben nicht umgesetztem Polyisocyanatden sich in situ aus den Aminosulfonsäuren, dem Neutralisationsamin und einem Teil der Polyisocyanatkomponente bildenden Emulgator F4) enthält.

Ein weiterer Typ geeigneter Emulgatoren F) sind solche, die in einem Molekül gleichzeitig ionische und nichtionische Strukturen enthalten. Bei diesen Emulgatoren F5) handelt es sich z. B. um mit tertiären Aminen, wie z. B. den oben genannten Neutralisationsaminen neutralisierte Alkylphenolpolyglykolether-phosphate und -phosphonate oder Fettalkoholpolyglykolether-phosphate und -phosphonate, wie sie beispielsweise in WO 97/31960 zur Hydrophilierung von Polyisocyanaten beschrieben sind, oder auch um mit solchen tertiären Aminen neutralisierte Alkylphenolpolyglykolether-sulfate oder Fettalkoholpolyglykolether-sulfate.

Unabhängig von der Art des Emulgators F) und dessen Herstellung wird dessen Menge bzw. die Menge der bei einer in situ-Herstellung des Emulgators den Polyisocyanaten zugesetzten ionischen und/oder nichtionischen Komponenten im allgemeinen so bemessen, dass die letztlich erhaltenen hydrophilen Polyisocyanatgemische eine die Dispergierbarkeit des Polyisocyanatgemisches gewährleistenden Menge, vorzugsweise 1 bis 50 Gew.-%, besonders bevorzugt 2 bis 30 Gew.-%, bezogen auf die Gesamtmenge der Polyisocyanatkomponenten enthalten.

Die wasserdispergierbaren hydrophilen Polyisocyanate stellen klare, praktisch farblose Produkte der vorstehend genannten Zusammensetzung dar, die gegebenenfalls auch in Lösemitteln, wie z. B. den oben genannten üblichen Lacklösemitteln, gelöster Form vorliegen können. Sie lassen sich in der Regel leicht, ohne Einsatz hoher Scherkräfte durch bloßes Einrühren in Wasser in sedimentationsstabile Dispersionen überführen lassen.

Gegebenenfalls können den hydrophilen Polyisocyanatgemischen vor der Emulgierung noch weitere nichthydrophilierte Polyisocyanate, insbesondere Lackpolyisocyanate der oben unter D) genannten Art, zugesetzt werden, wobei die Mengenverhältnisse bevorzugt so gewählt werden, dass die resultierenden Polyisocyanatgemische ebenfalls hydrophile Polyisocyanatgemische darstellen, da diese im allgemeinen aus Gemischen aus
(i) hydrophil modifizierten Polyisocyanatgemischen und
(ii) unmodifizierten Polyisocyanaten der beispielhaft genannten Art bestehen.

In solchen Mischungen übernehmen die hydrophilen Polyisocyanatgemische die Funktion eines Emulgators für den nachträglich zugemischten Anteil an nichthydrophilen Polyisocyanaten.

In Beschichtungsmitteln werden die hydrophilen Polyisocyanate vorzugsweise in Form wässriger Emulsionen eingesetzt, die in Kombination mit in Wasser dispergierten Polyhydroxylverbindungen in unblockierter Form im Sinne von wässrigen Zweikomponenten-Systemen, in mit Blockierungsmitteln der oben genannten Art blockierter Form im Sinne von wässrigen Einkomponenten-Systemen zur Umsetzung gebracht werden können.

Besonders bevorzugt werden die hydrophilen Polyisocyanatgemische als Vernetzer für in Wasser gelöste oder dispergierte Lackbindemittel oder Lackbindemittelkomponenten mit gegenüber Isocyanatgruppen reaktionsfähigen Gruppen, insbesondere alkoholischen Hydroxylgruppen, bei der Herstellung von Beschichtungen unter Verwendung von wässrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vor der Verarbeitung der Beschichtungsmittel nach beliebigen Methoden, durch Verwendung von dem Fachmann bekannten mechanischen Hilfsmitteln oder auch unter Verwendung von Zweikomponenten-Spritzpistolen erfolgen.

Prinzipiell sind als Reaktionspartner für die Polyisocyanatgemische alle in Wasser gelösten oder dispergierten Bindemittel, die gegenüber Isocyanaten reaktive Gruppen aufweisen, geeignet.

In diesem Zusammenhang seien als Lackbindemittel oder Lackbindemittelkomponenten beispielhaft erwähnt: In Wasser gelöste oder dispergierte, Hydroxylgruppen aufweisende Polyacrylate, insbesondere solche des Molekulargewichtsbereichs 1 000 bis 10 000 g/mol, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Zu den Bindemitteln zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind.

Bei der Verwendung als Vernetzerkomponente für wässrige Lackbindemittel werden die hydrophilen Polyisocyanate im allgemeinen in solchen Mengen eingesetzt, die einem Äquivalentverhältnis von NCO-Gruppen zu gegenüber NCO-Gruppen reaktionsfähigen Gruppen, insbesondere alkoholischen Hydroxylgruppen, von 0,5:1 bis 2:1 entsprechen.

Bevorzugt werden zur Herstellung der erfindungsgemäßen Partikeldispersionen in Polyisocyanaten hydrophobe oder hydrophile Polyisocyanate der vorstehend genannten Art auf Basis von IPDI, MDI, TDI, HDI oder deren Gemischen eingesetzt. Besonders bevorzugt werden Polyisocyanate auf Basis von IPDI und HDI, ganz besonders bevorzugt auf Basis HDI eingesetzt.

Bevorzugte zur Herstellung der erfindungsgemäßen Partikeldispersionen in Polyisocyanaten eingesetzte hydrophile Polyisocyanate sind die Umsetzungsprodukte aus hydrophoben Polyisocyanaten mit hydrophilen Polyetheralkoholen. Bevorzugt liegen den eingesetzten Polyisocyanaten Isocyanurat- oder Allophanatstrukturen zugrunde.

Beispiele für bevorzugte Polyisocyanate sind Desmodur VPLS 2319 (Hexamethylendiisocyanat Trimerisat, das durch einen Polyetherrest hydrophiliert ist, Bayer MaterialScience AG, Leverkusen, DE), Desmodur N3300 (Hexamethylendiisocyanat Trimerisat, Bayer MateriaiScience AG, Leverkusen, DE) und Bayhydrol 3100 (Hexamethylendiisocyanat Trimerisat, das durch einen Polyetherrest hydrophiliert ist, Bayer MaterialScience AG, Leverkusen, DE).

Selbstverständlich können die NCO-Gruppen der Zur Herstellung der erfindungsgemäßen Partikeldispersionen in Polyisocyanaten eingesetzten Polyisocyanate auch in mit aus der Polyurethanchemie an sich bekannten Blockierungsmitteln blockierter Form in Kombination mit den oben genannten wässrigen Lackbindemitteln oder Lackbindemittelkomponenten im Sinne von wässrigen Einkomponenten-PUR-Einbrennsystemen eingesetzt werden. Geeignete Blockierungsmittel sind beispielsweise Malonsäurediethylester, Acetessigester, Acetonoxim, Butanonoxim, □-Caprolactam, 3,5-Dimethylpyrazol, 1,2,4-Triazol, Dimethyl-1,2,4-triazol, Imidazol, Diisopropylamin, Dicyclohexylamin, N-tert.-butyl-benzylamin Cyclopentanon-2-carboxymethylester, Cyclopentanon-2-carboxyethylester oder beliebige Gemische dieser Blockierungsmittel.

### Beispiele:

Die angegebenen Teilchengrößen wurden mittels dynamischer Lichtstreuung (BIC 90 Plus, Fa. Brookhaven Instruments Corporation) bei 25 °C vermessen. Ein Tropfen einer verdünnten Nanopartikeldispersion (ca. 0.1 - 10 %) wurde dafür mit ca. 2 ml des gleichen Lösemittels weiter verdünnt um Mehrfachstreuung zu vermeiden. Für die Teilchengrößenmessung wurden die relevanten Parameter, wie Viskosität und Brechungsindex des Dispergiermediums in die Software eingegeben. Die Auswertung erfolgte mit Hilfe der Particle Sizing Software Vers. 3.59. Aus der gemessenen Autokorrelationsfunktion erhält man als Resultat den Intensitäts- bzw. den Teilchenzahlgewichteten z-Mittelwert.

Desmodur^{®} N 3300: Hexamethylendiisocyanat Trimerisat; NCO-Gehalt 21,8 +/- 0,3 Gew.-%, Viskosität bei 23°C ca. 3000 mPas, Bayer MaterialScience AG, Leverkusen, DE

Bayhydur^{®} 310:, Hexamethylendiisocyanat Trimerisat, das durch einen Polyetherrest hydrophiliert ist, NCO-Gehalt 17,4 +/- 0,5 Gew.-%, 2800+/- 800 mPas, Bayer MaterialScience AG, Leverkusen, DE

Polyether LB 25: monofunktioneller Polyether auf Ethylenoxid-/Propylenoxidbasis mit einem mittleren Molgewicht von 2250, OHZ = 25, OH-Gehalt 0,76 %, Bayer MateriaiScience AG, Leverkusen, DE

Bayhydur^{®} VP LS 2319: Hexamethylendiisocyanat Trimerisat, das durch einen Polyetherrest hydrophiliert ist, NCO-Gehalt 18.0 +/- 0.5 Gew.-%, 2800 +/- 800 mPas, Bayer MaterialScience AG, Leverkusen, DE.

### Beispiel 1:

In einer Standard-Rührapparatur wurden 51,9 g (1 val) Desmodur^{®} N3300 in 125 g Butylacetat und 0,05 g Dibutylzinndilaurat bei 80 °C vorgelegt und Stickstoff mit 2L/h übergeleitet. Dann wurden 198,1 g (0,33 val) Polyether LB 25 in 125 g Butylacetat zu der Lösung von Desmodur^{®} N3300 hinzugetropft und die Temperatur bei 80 °C gehalten, bis der theoretische NCO-Gehalt erreicht war. Anschließend wurden 0,05 g Benzoylchlorid zugegeben und die Temperatur 30 min bei 80 °C gehalten und dann auf Raumtemperatur abgekühlt.

Es wurde ein klares, farbloses Addukt mit einem NCO-Gehalt von 1,31 % und einem Festkörper von 50,2 % erhalten.

### Beispiel 2:

In einer Standard-Rührapparatur wurden 89,5 g (1 val) Desmodur^{®} N3300 in 50 g Butylacetat und 0,1 g Dibutylzinndilaurat bei 80 °C vorgelegt und Stickstoff mit 2L/h übergeleitet. Dann wurden 310,5 g (0,30 val) Polyether LB 25 in 50 g Butylacetat zu der Lösung von Desrnodur^{®} N3300 hinzugetropft und die Temperatur bei 80 °C gehalten, bis der theoretische NCO-Gehalt erreicht war. Anschließend wurden 0,1 g Benzoylchlorid zugegeben und die Temperatur 30 min bei 80 °C gehalten und dann auf Raumtemperatur abgekühlt.

Es wurde ein klares, farbloses Addukt mit einem NCO-Gehalt von 2,1 % und einem Festkörper von 80 % erhalten.

### Beispiel 3:

In einer Standard-Rührapparatur wurden 44,5 g (1 val) Desmodur^{®} N3300 in 125 g Butylacetat und 0,1 g Dibutylzinndilaurat bei 80 °C vorgelegt und Stickstoff mit 2L/h übergeleitet. Dann wurden 205,5 g (0,40 val) Polyether LB 25 in 125 g Butylacetat zu der Lösung von Desmodur^{®} N3300 hinzugetropft und die Temperatur bei 80 °C gehalten, bis der theoretische NCO-Gehalt erreicht war. Anschließend wurden 0,1 g Benzoylchlorid zugegeben und die Temperatur 30 min bei 80 °C gehalten und dann auf Raumtemperatur abgekühlt.

Es wurde ein klares, farbloses Addukt mit einem NCO-Gehalt von 0,95 % und einem Festkörper von 50 % erhalten.

### Beispiel 4:

In einer Standard-Rührapparatur wurden 31,5 g (1 val) Desmodur^{®} N3300 in 125 g Butylacetat und 0,1 g Dibutylzinndilaurat bei 80 °C vorgelegt und Stickstoff mit 2L/h übergeleitet. Dann wurden 218,5 g (0,60 val) Polyether LB 25 in 125 g Butylacetat zu der Lösung von Desmodur^{®} N3300 hinzugetropft und die Temperatur bei 80 °C gehalten, bis der theoretische NCO-Gehalt erreicht war. Anschließend wurden 0,1 g Benzoylchlorid zugegeben und die Temperatur 30 min bei 80 °C gehalten und dann auf Raumtemperatur abgekühlt.

Es wurde ein klares, farbloses Addukt mit einem NCO-Gehalt von 0,25 % und einem Festkörper von 50 % erhalten.

### Beispiel 5:

In einer Standard-Rührapparatur wurden 72,9 g (1 val) Bayhydur^{®} VP LS 2319 in 125 g Butylacetat und 0,05 g Dibutylzinndilaurat bei 80 °C vorgelegt und Stickstoff mit 2L/h übergeleitet. Dann wurden 177,1 g (0,25 val) Polyether LB 25 in 125 g Butylacetat zu der Lösung von Desmodur^{®} N3300 hinzugetropft und die Temperatur bei 80 °C gehalten, bis der theoretische NCO-Gehalt erreicht war. Anschließend wurden 0,05 g Benzoylchlorid zugegeben und die Temperatur 30 min bei 80 °C gehalten und dann auf Raumtemperatur abgekühlt.

Es wurde ein klares, farbloses Addukt mit einem NCO-Gehalt von 1,78 % und einem Festkörper von 49,8 % erhalten.

### Beispiel 6:

In einem 5 Liter Vierhalskolben mit Rückflusskühler und Innenthermometer und mechanischem Rührer wurden in einer Stickstoffatmosphäre 787,5 g (1 val) Polyether LB 25 aufgeschmolzen und anschließend bei bei 50 °C 294 g Hexamethylendiisocyanat (10 val, Äquivalentgewicht 84 g/val) innerhalb von 5 Minuten hinzugegeben. Anschließend wurde ca. 2 Stunden bei 100 °C gerührt, bis der NCO-Wert von 12,05 % erreicht war. Anschließend wurde über einen Zeitraum von 3 Stunden bei einer Temperatur von 140°C und einem Druck von 0,05 mbar eine Dünnschichtdestillation durchgeführt. Das erhaltene Produkt hatte einen NCO- Wert von 1,3 %. Der Restmonomerengehalt betrug < 0,1 % freies HDI. Die Viskosität betrug ca. 800 mPas bei einer Scherrate von 250 1/s und Raumtemperatur (Rheometer Anton Paar, MCR 51).

### Beispiel 7:

50 g Pluronic P 123 (Fa. BASF, Ludwigshafen, Deutschland) wurden in 900 g Butylacetat unter Rühren gelöst. Anschließend wurden 50 g wässrige Lithiummolybdat-Lösung (8 Gew%) zugegeben und die Mischung im gekühlten Ultraschallbad bis zur völligen Transparenz homogenisiert.

### Beispiel 8: Vergleichsbeispiel; Nanoskaliges Lithiummolybdat in Polyisocyanat ohne Stabilisator D)

1 g der auf 0 °C gekühlten, klaren und farblosen Mikroemulsion entsprechend Beispiel 7 wurden im Rotationsverdampfer bei 50 - 60 °C Badtemperatur rasch bis zur Trockene eingeengt. Die im gelartigen Pluronic vorliegenden Nanopartikel und 3 g Isocyanat VPLS 2319 mit FK 70 Gew% wurden durch Schütteln/Rühren homogen gemischt. Zunächst bildeten sich transparente und farblose Mischungen, die sich mit der Zeit einfärben und eintrüben bis schließlich ein farbiger Niederschlag entstand.

### Beispiele 9: Erfindungsgemäßes Beispiel; Nanoskaliges Lithiummolybdat in Polyisocyanat mit Stabilisator D)

1 g der auf 0 °C gekühlten, klaren und farblosen Mikroemulsion entsprechend Beispiel 7 wurden im Rotationsverdampfer bei 50 - 60 °C Badtemperatur rasch bis zur Trockene eingeengt. Die im gelartigen Pluronic vorliegenden Nanopartikel wurden mit 1 g Stabilisatorlösung (1 Gew% Stabilisator aus Beispiel 2 in Butylacetat) aufgenommen. Es zeigt sich eine transparente und farblose Nanodispersion mit 4000 ppm Lithiummolybdat. Die Teilchengröße lag im Bereich von 52 bis 96 nm (lognormal, Teilchenzahlgewichtung).

Die hergestellte Nano-Dispersion und 3 g Isocyanat Desmodur VPLS 2319 mit FK 70 Gew% wurden durch Schütteln/Rühren homogen gemischt. Es bildeten sich langzeitstabile transparente und farblose Mischungen. Die Transmission mittels Photometer (LICO 200; Dr. Lange) wurde nach 8 Tagen vermessen und betrug 97.2 %.

### Beispiel 10 - 15: Erfindungsgemäß; Dispersion der nanoskaligen Katalysatoren in Polyisocyanaten

Die in Tabelle 1 angegebene Menge der auf 0 °C gekühlten, klaren und farblosen Mikroemulsion [E] entsprechend Beispiel 7 wurden im Rotationsverdampfer bei 50 - 60 °C Badtemperatur rasch bis zur Trockene eingeengt. Die im gelartigen Pluronic vorliegenden Nanopartikel wurden mit der in Tabelle 1 angegebenen Menge an Stabilisatorlösung aufgenommen. Es zeigt sich eine transparente und farblose Nanodispersion mit 4000 ppm Lithiummolybdat. Die Teilchengröße lag im Bereich von 52 bis 96 nm (lognormal, Teilchenzahlgewichtung).

Die so hergestellte Nano-Dispersion wurde mit der in Tabelle 1 angegebenen Menge an Isocyanat versetzt und durch Schütteln/Rühren homogen gemischt. Es bildeten sich langzeitstabile transparente und farblose Mischungen. Die Transmission mittels Photometer (LICO 200; Dr. Lange) wurde nach 8 Tagen vermessen.

**Tabelle 1.**

| | | | **Vergleich** | **Erfindungsgemäß** | | | | | | |
|---|---|---|---|---|---|---|---|---|---|---|
| | | **Beispiel** | **8** | **9** | **10** | **11** | **12** | **13** | **14** | **15** |
| [A] | Isocyanat | --- | VPLS 2319 | VPLS 2319 | VPLS 2319 | VPLS 2319 | N 3300 | N 3300 | N 3300 | N 3100 |
| [B] | Festkörper | [Gew%] | 53 | 53 | 87 | 45 | 87 | 45 | 45 | 65 |
| [C] | Gehalt Lithiummolubdat | [ppm] | 1000 | 1000 | 500 | 1000 | 500 | 1000 | 1000 | 1000 |
| [D] | Gehalt Stabilisator | [Gew%] | - | 0,25 | 1,25 | 0,5 | 1,25 | 2,5 | 2,5 | 10 |
| | | | | | | | | | | |
| [E] | Masse Mikroemu./Nano-Disp. | [g] | 1 | 1 | 0,5 | 1 | 0,5 | 1 | 1 | 1 |
| [F] | Gehalt Stabilisator | [Gew%] | - | 1 | 10 | 2 | 10 | 10 | 10 | 40 |
| [G] | Stabilisator | --- | - | Bsp. 2 | Bsp. 6 | Bsp. 5 | Bsp. 2 | Bsp. 3 | Bsp. 4 | Bsp. 1 |
| [H] | Masse Isocyanat | [g] | 3 | 3 | 3,5 | 3,0 | 3,5 | 3 | 3,0 | 3,0 |
| [I] | Festkörper | [Gew%] | 70 | 70 | 100 | 60 | 100 | 60 | 60 | 87 |
| Transmission nach 8 Tagen** | | [%/11mm] | - | 97,2 | 99,1 | 99,9 | 94,6 | 98,2 | 99,3 | 91,2 |

| | | | | | | | | | | |
|---|---|---|---|---|---|---|---|---|---|---|
| * in Butylacetat ** in Referenz zu Wasser | | | | | | | | | | |

### Beispiele 16: Nanoskaliges Lithiummolybdat in Butylacetat mittels Sprühtrocknung hergestellt

50 g der auf 0 °C gekühlten, klaren und farblosen Mikroemulsion entsprechend Beispiel 7 wurden im Sprühtrockner (Büchi B-290) bei 90 °C versprüht. 1 g der im gelartigen Pluronic vorliegenden Nanopartikel wurden mit 80 g Stabilisatorlösung (2,5 Gew% Stabilisator Beispiel 6 in Butylacetat) aufgenommen. Es zeigt sich eine transparente und farblose Nanodispersion mit 1000 ppm Lithiummolybdat. Die Teilchengröße mittels DLS lag bei 53 nm (lognormal, Intensitätsgewichtung), bzw. 17 nm (lognormal, Teilchenzahlgewichtung).

Eine Bildanalyse mittels TEM (Transmissionselektronenmikroskop) ergibt eine durchschnittliche Partikelgröße von 26 nm. Der Minimalwert lag bei 7 nm, der Maximalwert bei 56 nm. Das Kollektiv betrug 333 Partikel.

### Beispiel 17: Aushärtekinetik eines Lackes mit und ohne Nanodispersion

Vergleich der Aushärtekinetik durch Messung der Trocknungszeit und Pendelhärte eines Klarlacks. Untersucht wurde eine Mischung aus Bayhydrol A 145 und Bayhydur VPS 2319 mit einem FK-Gehalt von 55% in Butylacetat einmal ohne und einmal mit 500 ppm Lithiummolybdat-Nanopartikeln. Der Lithiummolybdat-Nanopartikel enthaltene Lack zeigte eine um bis zu 70% schneller Trocknungszeit sowie eine um 170% erhöhte Pendelhärte direkt nach Erkalten des Lackes.

## Patentansprüche

1. Verwendung von oxyalkylengruppenhaltigen Di- oder Polyisocyanaten zur Stabilisierung von Partikeldispersionen mit Teilchengrößen gemessen mittels dynamischer Lichtstreuung von 1 bis 500 nm

2. Verfahren zur Herstellung von Dispersionen nanopartikulär dispergierter Partikel wasserlöslicher Verbindungen mit einer mittleren Teilchengröße gemessen mittels dynamischer Lichtstreuung von 1 bis 500 nm, bei dem eine Wasser-in-Öl-Emulsion aus
A) einer wässrigen Lösung eines oder mehrerer wasserlöslicher Salze,
B) einem organischen Lösungsmittel oder Lösungsmittelgemisch und
C) Emulsionsstabilisatoren,
hergestellt wird und anschließend das enthaltene Wasser bis zu einem Restgehalt von maximal 2 Gew.-% bezogen auf das Endprodukt entfernt wird und dann mit einer Mischung umfassend
D) oxyalkylengruppenhaltige Di- oder Polyisocyanate als Stabilisatoren und
E) organische Lösemittel vermischt wird.

3. Verfahren gemäß Anspruch 2, **dadurch gekennzeichnet, dass** es sich bei den wasserlöslichen Salzen um Molybdatsalze handelt.

4. Verfahren gemäß Anspruch 2 oder 3, **dadurch gekennzeichnet, dass** in B) Butylacetat, Methoxypropylacetat, Essigsäureethylester, Caprolacton, Solvesso, Toluol, Xylol oder deren Mischungen eingesetzt werden.

5. Verfahren gemäß einem der Ansprüche 2 bis 4, **dadurch gekennzeichnet, dass** zur Stabilisierung in Komponente C) PEO-PPO-PEO- oder PPO-PEO-PPO-Blockcopolymere, Copolymere mit Poly(ethylenoxid)-Poly(methylmethacrylat)- (PEO-PMMA) oder Poly(ethylenoxid)-Poly(n-butylacrylat)-Blöcken (PEG-nBA) oder Polyoxyalkylene-Amine eingesetzt.

6. Verfahren gemäß Anspruch 5, **dadurch gekennzeichnet, dass** die in C) zur Stabilisierung eingesetzten Verbindungen Molekulargewichte von 400 bis 20 000 g/mol (gemessen nach DIN53240) aufweisen.

7. Verfahren gemäß einem der Ansprüche 2 bis 6, **dadurch gekennzeichnet, dass** der Gehalt an Wasser bis auf weniger als 0,5 Gew.-% reduziert wird.

8. Verfahren gemäß einem der Ansprüche 2 bis 6, **dadurch gekennzeichnet, dass** in D) oxyalkylengruppenhaltige Di- oder Polyisocyanate eingesetzt werden, die durch Umsetzung von Isocyanaten (I) auf Basis von IPDI, MDI, TDI, HDI oder deren Gemischen mit Verbindungen (II) erhältlich, die neben Oxyalkylengruppen wenigstens eine gegenüber Isocyanatgruppe reaktive Gruppe aufweisen.

9. Verfahren gemäß Anspruch 8, **dadurch gekennzeichnet, dass** die Verbindungen (II) hydroxyfunktionelle Polyether auf Basis von Ethylenoxid, Propylenoxid oder deren Mischungen mit einem zahlenmittleren Molekulargewicht von 200 bis 4000 g/mol sind.

10. Verfahren gemäß Anspruch 9, **dadurch gekennzeichnet, dass** in den hydroxyfunktionellen Polyethern 70 bis 90 % der Oxyalkyleneinheiten auf Ethylenoxid basieren.

11. Dispersionen nanopartikulär dispergierter Partikel wasserlöslicher Verbindungen mit einer mittleren Teilchengröße gemessen mittels dynamischer Lichtstreuung von 1 bis 500 nm erhältlich nach einem Verfahren gemäß einem der Ansprüche 2 bis 11.

12. Verfahren zur Herstellung von Dispersionen nanopartikulär dispergierter Partikel wasserlöslicher Verbindungen mit einer mittleren Teilchengröße gemessen mittels dynamischer Lichtstreuung von 1 bis 500 nm in Polyisocyanaten, bei dem Dispersionen gemäß Anspruch 11 mit Polyisocyanaten vermischt werden.

13. Verfahren gemäß Anspruch 12, **dadurch gekennzeichnet, dass** es sich beiden Polyisocyanaten um hydrophobe oder hydrophile Polyisocyanate auf Basis von IPDI, MDI, TDI, HDI oder deren Gemischen handelt.

14. Dispersionen nanopartikulär dispergierter Partikel wasserlöslicher Verbindungen mit einer mittleren Teilchengröße gemessen mittels dynamischer Lichtstreuung von 1 bis 500 nm in Polyisocyanaten erhältlich nach einem Verfahren gemäß Anspruch 12 oder 13.

15. Verwendung der Dispersionen gemäß Anspruch 11 als Katalysatoren für die Umsetzung von Isocyanaten mit Polyolen oder Polyaminen.
